Europäisches Patentamt

European Patent Office

Office européen des brevets

(19)

(11) **EP 0 692 349 A2**

(12) **EUROPÄISCHE PATENTANMELDUNG**

(43) Veröffentlichungstag:
17.01.1996 Patentblatt 1996/03

(51) Int. Cl.$^6$: **B27G 5/02**, B23Q 1/25,
B23Q 3/18

(21) Anmeldenummer: 95109409.3

(22) Anmeldetag: 18.06.1995

(84) Benannte Vertragsstaaten:
AT CH DE FR IT LI NL

(30) Priorität: 21.06.1994 CH 1970/94

(71) Anmelder: Optical and Electronic Engineering
Dr. Ing. ETH Paul D. Iten
CH-6047 Kastanienbaum (CH)

(72) Erfinder:
• Iten, Paul D. Dr.phil.nat.Dipl.Ing.ETH
CH-6047 Kastanienbaum (CH)
• Iten, Dominik M.
CH- 6047 Kastanienbaum (CH)

(74) Vertreter: Blum, Rudolf Emil Ernst et al
CH-8044 Zürich (CH)

(54) **Positioniervorrichtung, insbesondere für Sägen und Fräsmaschinen**

(57) Die Positioniervorrichtung erlaubt es, ein Werkstück unter beliebigem Winkel und Abstand von einem Säge- bzw. Fräswerkzeug (50) zu positionieren. Sie weist einen Anschlagbalken (6) auf, der um eine Drehachse (4) gedreht und in seiner Längsrichtung (X) verschoben werden kann. Auf dem Anschlagbalken (6) befinden sich zwei verschiebbar angeordnete Anschlagklappen (39, 40), sowie eine Hilfsanschlagklappe (44). Mittels Messensoren (8, 18, 46) werden der Drehwinkel, die Verschiebung des Anschlagbalkens (6) und die Verschiebung der Anschlagklappen gemessen und an eine Messelektronik (15) weitergegeben. Diese errechnet aus diesen Werten, unter Berücksichtigung der gegenseitigen Klappenstellungen, die Schnittlänge und den Schnittwinkel.

Im Gegensatz zu herkömmlichen Vorrichtungen wird die Schnittlänge direkt ermittelt. Komplizierte Manipulationen zur Kompensation der Schnittlänge aufgrund der Winkelstellung entfallen. Die Vorrichtung eignet sich zum Einsatz in bestehenden und neuen Säge-, Fräs- und Schneidemaschinen aller Art.

Fig. 1

EP 0 692 349 A2

**Beschreibung**

Die Erfindung bezieht sich auf eine Positioniervorrichtung gemäss dem Oberbegriff von Anspruch 1.

Solche Positioniervorrichtungen finden insbesondere in Formatkreissägen, horizontalen Plattenaufteilanlagen, sowie in Nut- und Zapfenfräsmaschinen und ähnlichen Bearbeitungsanlagen Anwendung. Sie sollen es erlauben, die Richtung und die Position des Sägeschnitts bzw. der Fräsnut zu definieren.

Hierzu muss die Positioniervorrichtung die Aufgabe eines Winkel- und eines Längenanschlags übernehmen.

Eine bekannte Vorrichtung dieser Art wird in DE-A-39 17 146 beschrieben. Sie umfasst einen seitlichen Anschlag und einen Längsanschlag für das Werkstück. Sie kann um eine Drehachse gedreht und translatorisch verschoben werden. Soll mit einer solchen Anlage zum Beispiel eine Holzlatte unter schrägem Winkel abgesägt werden, so stellt sich das Problem, dass die Schnittlänge vom eingestellten Winkel abhängt, da der Nullpunkt des Schnittlängen-Messystems abhängig vom Drehwinkel ist.

In der Praxis wird deshalb in der Regel der Nullpunkt der Längenmessachse, d.h. der translatorischen Verschiebung, für jeden Drehwinkel neu eingestellt, zum Beispiel durch Abtasten des Sägeblattes mit einem sogenannten Splitterholz und Verschieben des Massstabs entlang der Messachse. Dies ist jedoch umständlich und nicht sehr genau.

In DE-A-39 17 146 wird deshalb eine Korrekturvorrichtung vorgeschlagen, welche eine Winkelskala trägt, die auf den jeweiligen Drehwinkel einzustellen ist. Dadurch wird der Längsanschlag um einen Korrekturbetrag verschoben, so dass die Längenskala wieder die effektive Schnittlänge anzeigt. Die Bedienung dieser Vorrichtung ist jedoch relativ schwierig und die Genauigkeit der Korrektur begrenzt.

Deshalb stellt sich die Aufgabe, eine Vorrichtung der eingangs genannten Art bereitzustellen, die Nachteile des Standes der Technik mindestens teilweise vermeidet.

Diese Aufgabe wird durch die Positioniervorrichtung gemäss Anspruch 1 gelöst.

Durch das Bereitstellen einer Messvorrichtung, die Signale von Winkel- und Längenfühlern verknüpft und daraus den Abstand der Anschlagposition vom Schnittpunkt der Säge-, Arbeits- und Anschlagfläche ermittelt, kann der Arbeiter sofort feststellen, wo der Schnitt- resp. der Fräsvorgang im Werkstück stattfinden wird. Eine so aufgebaute Anlage kann ohne weiteres eine Präzision und Arbeitsergonomie erreichen, die weit über jener herkömmlicher Lösungen liegt.

Vorzugsweise weist die Positioniervorrichtung einen Anschlagbalken auf, dessen Seitenkanten je eine Anschlagfläche bilden. Das Werkstück kann beidseits des Balkens in Anschlag gebracht werden.

Das Bearbeiten kleiner Werkstücke unter grösseren Drehwinkeln wird dadurch erleichtert, dass der Anschlagbalken entlang seiner Längsachse gegenüber der Drehachse verschoben werden kann. So können kleinere Werkstücke auch bei grossen Drehwinkeln noch bis zur Sägeebene gebracht werden. Wird diese Längsverschiebung des Anschlagbalkens mittels eines Messfühlers gemessen und zur Verschiebung der Anschlagposition addiert (bzw. davon subtrahiert), so kann wiederum automatisch die genaue Schnittlänge ermittelt werden, ohne dass der Anwender spezielle Manipulationen vornehmen müsste.

Der Längsanschlag wird vorzugsweise durch eine oder mehrere Anschlagklappen gebildet, die beidseits des Anschlagbalkens in Stellung gebracht werden können. Werden die Anschlagklappen mit Sensoren versehen, die feststellen, auf welcher Seite des Anschlagbalkens die Anschlagklappen liegen, so kann die Auswertevorrichtung automatisch die nötigen Korrekturen vornehmen.

Zur Verlängerung des Messbereichs kann eine Hilfsklappe vorgesehen sein, welche bei Bedarf mit der resp. den übrigen Klappen unter festem Abstand verbunden werden kann.

Weitere Vorzüge und Anwendungen der Vorrichtung ergeben sich aus der nun folgenden Beschreibung zweier Ausführungsformen anhand der Figuren. Dabei zeigen:

Figur 1 einen Längsschnitt durch eine erste Ausführung der Positioniervorrichtung bei Winkel U = 0°,
Figur 2 eine Aufsicht auf die Vorrichtung nach Fig. 1 bei U ≠ 0°,
Figur 3 einen Schnitt durch den Anschlagbalken,
Figur 4 eine schematische Darstellung einer erfindungsgemässen Vorrichtung,
Figur 5 eine Darstellung der Arbeitsweise einer Positioniervorrichtung mit mehren Anschlagklappen,
Figur 6 einen Schnitt durch ein zweites Ausführungsbeispiel der Erfindung, und
Figur 7 einen Schnitt entlang Linie VII-VII von Figur 6.

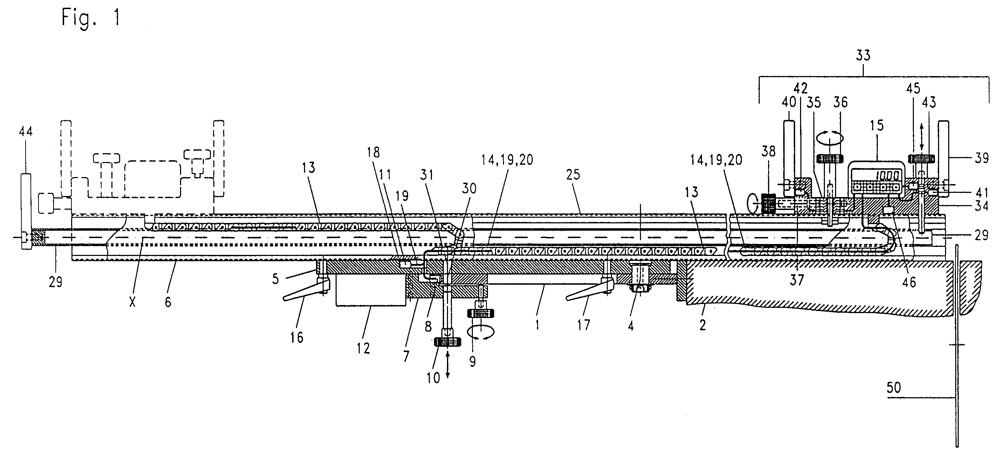

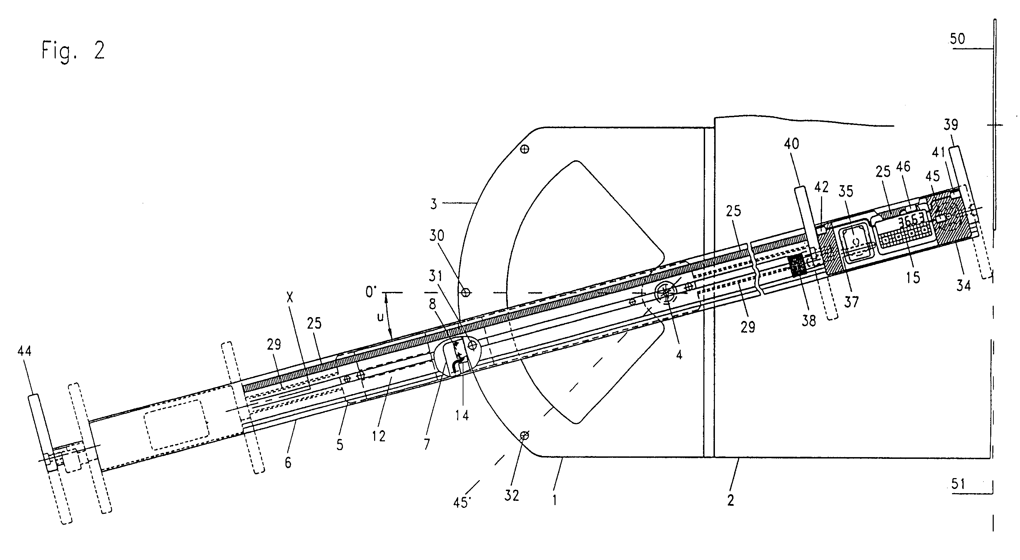

Eine erste bevorzugte Ausführungsform eines Längen- und Winkelanschlags gemäss der vorliegenden Erfindung wird in den Figuren 1 bis 3 gezeigt.

Die Basis des Gerätes bildet ein Kreisbogensegment 1, welches seitlich an einem verschiebbaren Maschinentisch 2 einer Formatkreissäge befestigt ist. Die gleiche Vorrichtung eignet sich jedoch auch zum Beispiel zur Montage in einer Plattenaufteilanlage oder einer Nut- und Zapfenfräsmaschine. Im folgenden sei jedoch als Beispiel eine Ausführung an einer Kreissäge beschrieben. Das Sägeblatt dieser Maschine wird mit der Referenznummer 50 bezeichnet.

Der Maschinentisch 2 kann parallel zur horizontalen Arbeitsebene bewegt werden. Alternativ kann das Kreisbogensegment 1 auch in den Maschinentisch integriert sein. Die zylindrische Mantelfläche des Kreisbogensegments 1 trägt ein Magnetband 3 mit periodischer Magnetisierung für die messtechnische Erfassung des Drehwinkels u. Alternativ zum Magnetband 3 kann eine andere Form der Winkelmessung eingesetzt werden, z.B. ein optischer Drehgeber.

Im Zentrum des Kreisbogensegments 1 befindet sich ein Lagerzapfen oder Drucklager 4, der resp. das die Drehachse definiert und eine drehbare Befestigung für eine Grundplatte 5 bildet. Diese Grundplatte 5 ist Befestigungsbasis für ein Anschlagprofil 6, einen Sensorhalter 7 mit Winkelsensor 8, eine Klemmschraube 9, einen Indexstift 10, sowie für den Profilverschiebungssensor 11 und eine Spannungsquelle (z. B. Akkus) 12, die über ein Kabel 20 mit einer Messelektronik 15 verbunden ist. Die Spannungsquelle 12 kann aber auch direkt in die Messelektronik 15 integriert sein.

Der im Sensorhalter 7 befestigte Winkelsensor 8 erfasst durch Abtasten des Feldes des Magnetbandes 3 eine Änderung des Winkels u, welche über ein Sensorkabel 14 an die Messelektronik 15 weitergeleitet wird.

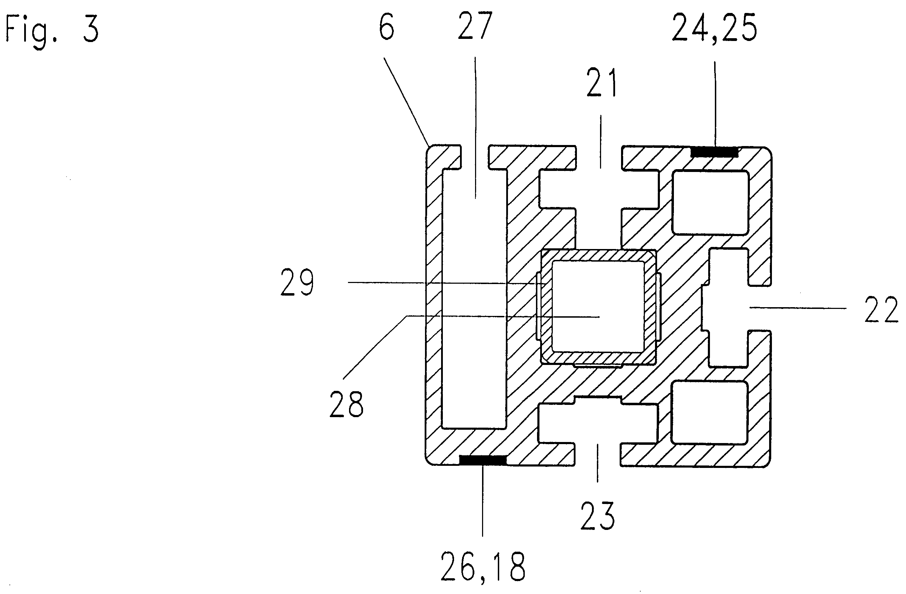

Das Anschlagprofil 6 ist mittels Klemmhebeln 16 und 17 mit der Grundplatte verbunden. Werden die Klemmhebel 16, 17 gelöst, so kann das Anschlagprofil 6 entlang seiner Längsachse X verschoben werden. Auf der Unterseite des Anschlagprofils 6 ist ein Magnetband 18 (Fig. 3) angebracht, welches zusammen mit dem Profilverschiebungssensor 11 erlaubt, die Profilverschiebung zu erfassen. Das Signal des Sensors 11 wird mit Kabel 19 übertragen.

Somit verbinden drei Kabel 14, 19 und 20 die Grundplatte 5 mit der auf dem Anschlagprofil 6 verschiebbaren Messelektronik 15. Aus praktischen Gründen wäre eine lose (frei hängende) Kabelverbindung undenkbar. Deshalb werden diese Kabel in einer Schleppkette 13 geführt, welche ihrerseits in einem Hohlraum 27 des Anschlagprofils 6 gleitet (Fig. 3). Anstelle der Schleppkette können jedoch auch andere Arten der Kabelführung eingesetzt werden.

Das Anschlagprofil 6 besitzt drei Befestigungsnuten 21, 22 und 23, ferner eine Nut 24 zur Aufnahme eines Magnetbandes 25 für die Messung einer Verschiebung des Schlittens 33 gegenüber dem Anschlagprofil 6 und eine Nut 25 zur Aufnahme des Magnetbandes 18 für die Messung der Verschiebung des Anschlagprofils 6 gegenüber der Grundplatte 5.

Die Klemmschraube 9 erlaubt die mechanische Fixierung des Anschlagprofils 6 in jeder beliebigen Winkelstellung $-u_{max} < u < u_{max}$, wobei $u_{max}$ je nach Grösse des Kreisbogensegments bei 50° bis 75° liegen kann. Mittels des Indexstiftes 10 kann zusammen mit den Indexbohrungen 30 und 31 im Kreisbogensegment 1 bzw. der Grundplatte 5 die Nullage ($u = 0$°) des Anschlagprofils 6 definiert werden. Dies ist insbesondere dann wichtig, wenn die Winkelmessung wie beim hier verwendeten Messprinzip lediglich Relativwerte erzeugt. Zur Initialisierung der Messelektronik kann das Anschlagprofil in die Nullage gebracht und die Elektronik zurückgesetzt werden. Ferner ist eine Indexbohrung unter 45° vorgesehen, die eine Winkeleichung der Apparatur erlaubt, indem die Bohrung 31 mit der Bohrung 32 zur Deckung gebracht wird.

Auf dem Anschlagprofil 6 ist ein Schlitten 33 angeordnet, welcher in Längsrichtung X verschoben werden kann. Dieser bildet die mechanische Basis der Messelektronik 15 und besteht im wesentlichen aus dem Anschlagkörper 34, dem Klemmblock 35 mit Feststellschraube 36, der Gewindespindel 37 mit Drehknopf 38, sowie den Anschlagklappen 39 und 40. Jede der Anschlagklappen 39, 40 ist um eine Schwenkachse parallel zur Längsachse X schwenkbar und kann in eine Position links oder rechts (gestrichelt) des Anschlagbalkens 6 gebracht werden. Zur Detektion der jeweiligen Stellung der Anschlagklappen 39 und 40 sind Näherungssensoren 41 bzw. 42 vorgesehen, deren Signale in die Messelektronik 15 geleitet werden.

Der Klemmblock 35 kann mittels der Feststellschraube 36 auf dem Anschlagprofil 6 festgeklemmt werden. Der Klemmbock 35 ist über die Gewindespindel 37 mit dem Anschlagkörper 34 verbunden und erlaubt mittels Drehknopf 38 eine Justierung des Schlittens 33 in der Profilachse X.

Axial und verschiebbar im Hohlraum 28 des Anschlagprofils 6 ist eine Auszugsstange 29 vorgesehen. Diese kann mit einer Raste 43 mit dem Anschlagkörper 34 resp. dem Schlitten 33 mechanisch verbunden werden, so dass die am hinteren Ende der Auszugsstange befestigte Hilfsanschlagklappe 44 in einem definierten Abstand zur Anschlagklappe 39 rsp. 40 steht. Die Lage der Raste 43 (ein- oder ausgerastet) wird mittels eines weiteren Näherungsdetektors 45 festgestellt und zur Auswertung an die Messelektronik 15 weitergeleitet.

Zum Abtasten des Magnetbandes 25 ist ein Schlittenverschiebungssensor 45 vorgesehen, dessen Signal direkt an die Messelektronik 15 gegeben wird.

Zur Initialisierung der Längenmessung der Messelektronik 15 wird das Anschlagprofil 6 wie oben erwähnt in die Winkelstellung $u = 0$° gebracht und der Schlitten 33 und das Anschlagprofil 6 in eine mechanisch definierte Referenzlage gebracht, welche durch einen (nicht gezeigten) Anschlag gegeben ist. Dann wird die Messelektronik 15 auf einen Anfangslängenwert $L_0$ und Winkelwert $U = 0$° zurückgesetzt.

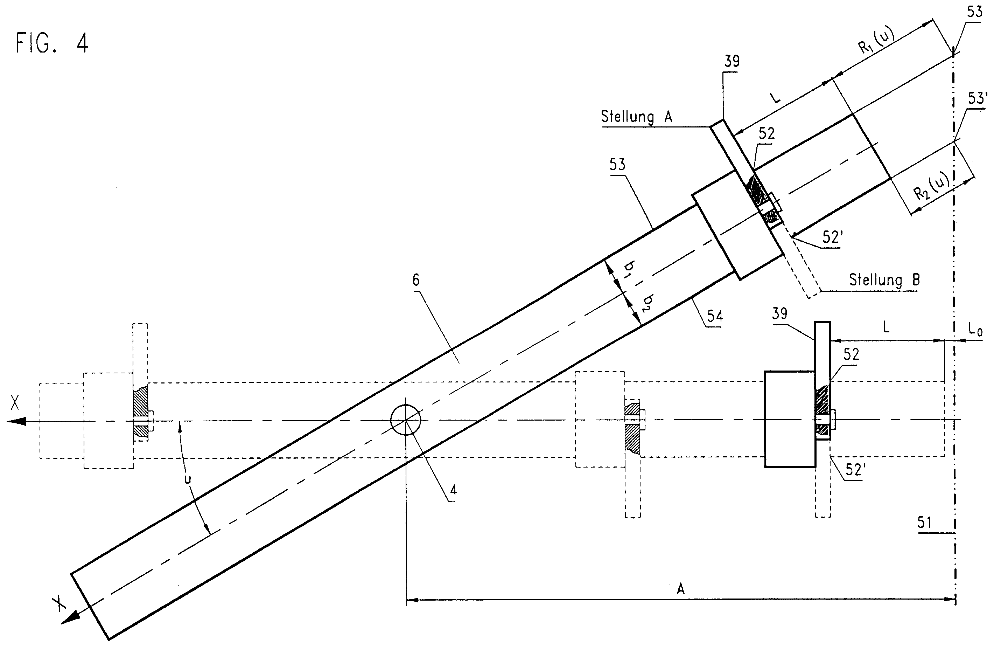

Die Arbeitsweise der in den Figuren 1 bis 3 gezeigten Positioniervorrichtung wird nun anhand von Fig. 4 erläutert. Diese Figur zeigt nochmals schematisch das Anschlagprofil 6 in zwei verschiedenen Positionen. In einer ersten Position (gestrichelt) befindet es sich in der Grundstellung ($u = 0$°), in einer zweiten Position (durchgezogen) wurde es um das Drehlager rsp. die Drehachse 4 gedreht. Zur Vereinfachung wurde nur eine der Anschlagklappen 39 in verschiedenen Positionen dargestellt.

In der Grundstellung liegt das vordere Ende des Anschlagprofils 6 um eine Länge $L_0$ von der durch das Sägeblatt definierten Sägeebene 51 entfernt. Die Anschlagklappe 39 kann entlang des Anschlagprofils 6 in Richtung X verschoben werden. Ihr jeweiliger Abstand vom vorderen Ende des Anschlagprofils 6 wird mit L bezeichnet. In jeder Position definiert die Anschlagklappe 39 eine entsprechende Anschlagposition 52 (in der linken, durchgezogenen Stellung A) rsp. 52' (in der rechten, gestrichelten Stellung B) am Anschlagprofil 6. Als Messgrösse für die Längsverschiebung zeigt nun die Messelektronik 15 den Abstand S von der Anschlagposition 52 rsp. 52' zum Zielpunkt 53 rsp. 53' an. Der Zielpunkt 53 rsp. 53' ist als Schnittpunkt der Sägeebene 51, der horizontalen Arbeitsebene und der jeweiligen Anschlagebene definiert. Die Arbeitsebene ist jene Ebene, in welcher sich das Apschlagprofil 6 befindet. Die Anschlagebene wird durch die jeweilig benutzte Kantenfläche 53 rsp. 54 des Anschlagprofils festgelegt.

Der Abstand S, welcher die Schnittlänge definiert, hängt somit vom jeweiligen Drehwinkel u, der Längsposition L der Anschlagklappe 39, dem Abstand $L_0$, und dem Abstand $b_1$ rsp. $b_2$ der Drehachse 4 von der jeweilig verwendeten Anschlagfläche 53 rsp. 54 ab und ist gegeben durch

$$S_{1,2}(u) = L + L_0 + f_{1,2}(u) \tag{1}$$

mit

$$f_{1,2} = \frac{A(1-\cos(u)) + b_{1,2} \cdot \tan(u/2)(1+\cos(u))}{\cos(u)}$$

wobei der Index 1 rsp. 2 die jeweilig verwendete Anschlagfläche 53 rsp. 54 bezeichnet und der Wert von $b_1$ positiv und der Wert von $b_2$ negativ einzusetzen ist. A ist der Abstand der Drehachse 4 von der Sägeebene 51.

Wie zu den Figuren 1 bis 3 erwähnt wurde, kann der Anschlagbalken 6 in der Längsrichtung X verschoben werden, wenn die Klemmen 16 und 17 gelöst werden. Wird er zum Beispiel um den Wert dP gegen die Sägeebene verschoben, so muss Formel 1 entsprechend korrigiert werden:

$$S_{1,2}(u) = L + L_0 - dP + f_{1,2}(u) \tag{2}$$

Eine Verschiebung des Anschlagbalkens gegen die Sägeebene ist insbesondere dann sinnvoll, wenn kleine Werkstücke unter grossen Winkeln u gesägt werden sollen.

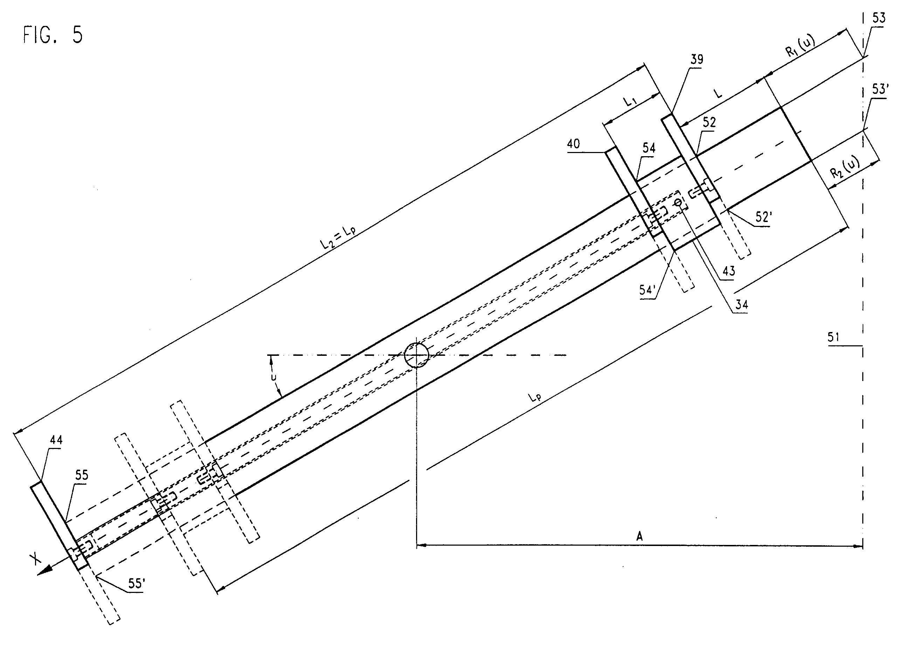

Figur 5 zeigt die Situation bei einer Positioniervorrichtung mit zwei Anschlagklappen 39, 40 und einer Hilfsanschlagklappe 44. Hier ist $L_1$ der Abstand zwischen den Anschlagklappen 39 und 40, $L_P$ die Länge des Anschlagbalkens 6 und $L_2$ der Abstand zwischen der Anschlagklappe 39 und der Hilfsanschlagklappe 44. Im vorliegenden Fall ist $L_2 = L_P$.

Bei drei Klappen gibt es sechs verschiedene mögliche Anschlagpositionen 52, 52', 54, 54', 55, 55', welche je nach Stellung der Anschlagklappen verwendet werden können. Im folgenden bezeichnen $S_1$, $S_2$, $S_3$, $S_4$, $S_5$ und $S_6$ die Abstände zwischen 52 und 53, 52' und 53', 54 und 53, 54' und 53', 55 und 53, rsp. 55' und 53'. Während sich $S_1$ und $S_2$ aus den obigen Formeln (1) oder (2) ergeben, gilt für die übrigen Längen:

$$S_{3,4} = S_{1,2} + L_1, \text{ und} \tag{3}$$

$$S_{5,6} = S_{1,2} + L_2. \tag{4}$$

Die Messelektronik 15 entscheidet in einem automatischen Betriebsmodus selbständig aufgrund der Signale der Sensoren 41, 42 und 45 rsp. aufgrund der Positionen der Anschlagklappen 39, 40 und der Raste 43, welche der Längen

$S_i$ (i = 1..6) sie anzeigt. Dies geschieht gemäss folgender Tabelle:

| Raste 43 | Klappe 39 | Klappe 40 | Schnittmass $S_i$ |
|---|---|---|---|
| aus | A | A | $S_1$ |
| aus | B | B | $S_2$ |
| aus | B | A | $S_3$ |
| aus | A | B | $S_4$ |
| ein | B | B | $S_5$ |
| ein | A | A | $S_6$ |

Hierbei bezeichnet "aus" die ausgerastete und "ein" die eingerastete Stellung der Raste 43. A bezeichnet die in Figur 5 durchgezogen gezeichnete Stellung der Anschlagklappen 39 rsp. 40, B die gestrichelt gezeichnete. Die Kombinationen, die nicht in der Tabelle erscheinen, sind ungültig und führen zu keiner Anzeige.

Die Messelektronik kann auch einen manuellen Betriebsmodus aufweisen, in welchem die anzuzeigende Schnittlänge $S_i$ manuell ausgewählt werden kann.

Zusammenfassend kann die Messelektronik 15 also aufgrund der Signale des Winkelmess-Sensors 8 (Winkel u), des Profilverschiebungs-Sensors 11 (Länge dP), des Schlittenverschiebungs-Sensors 46 (Signal L) alle Längen $S_1$ bis $S_6$ aufgrund der konstanten Werte $L_0$, $L_1$, $L_2$, A, $b_1$ und $b_2$ berechnen. Dabei ist zu beachten, dass nur A von der jeweiligen Sägemaschine abhängt und leicht messbar ist. Deshalb ist die Vorrichtung universell ohne grosse Anpassungen bei allen bekannten Sägen rsp. Fräsmaschinen einsetzbar.

Zur Auswahl des anzuzeigenden Schnittmasses $S_i$ werden die Signale der Sensoren 41, 42 und 45 gemäss oben stehender Tabelle ausgewertet. Da all diese Sensoren auf dem Schlitten 33 montiert sind, der auch die Messelektronik 15 trägt, vereinfacht sich der Aufbau des Geräts.

Die Messelektronik muss auf ihrer Anzeige nicht nur die Schnittlänge S sondern auch den Winkel u anzeigen. Hierzu wird sie zwischen einem Längen- und Winkelmodus umgeschaltet, wobei sie im Längenmodus die Schnittlänge S und im Winkelmodus den Winkel u (rsp. dessen Kompliment 90° - u) anzeigt. Das Umschalten zwischen Winkel- und Längenmodus kann manuell oder automatisch geschehen. Im automatischen Betriebsmodus schaltet die Messelektronik in den Winkelmodus, wenn sich der Winkel u bei fixiertem Schlitten 33 ändert, und in den Längenmodus, sobald der Schlitten 33 bei festem Winkel u bewegt wird.

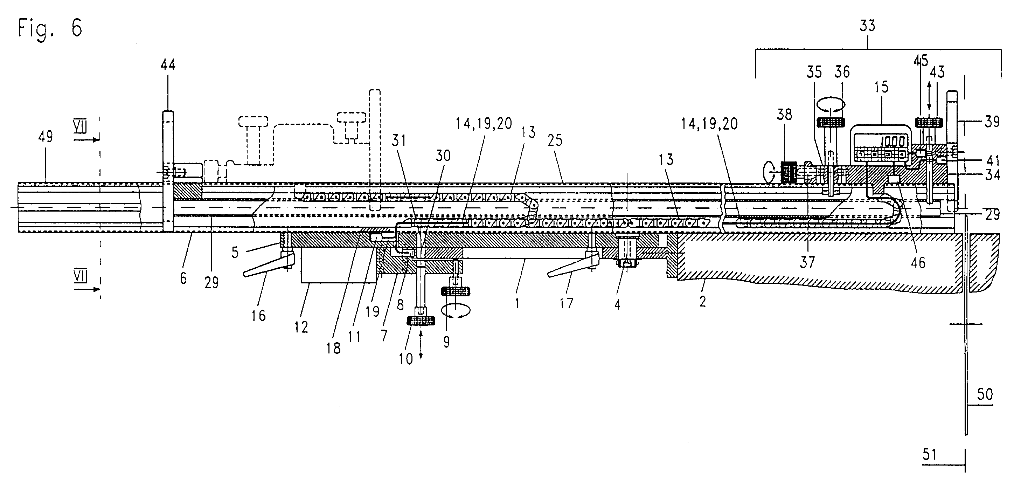

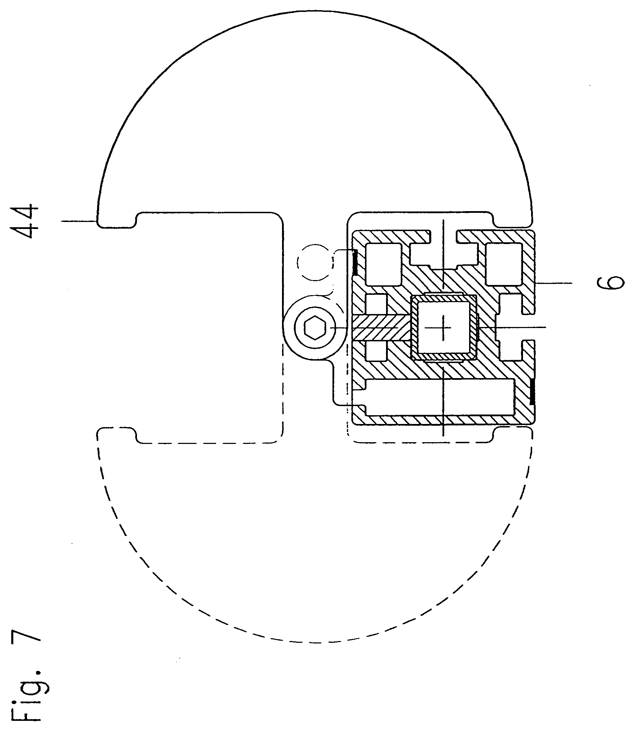

Die Figuren 6 und 7 zeigen abschliessend noch eine zweite Ausführung der Positioniervorrichtung. Diese entspricht im wesentlichen jener nach den Figuren 1 - 3, wobei jedoch am Schlitten 33 nur eine Anschlagklappe 39 vorgesehen ist. Um dennoch einen durchgehenden Messbereich zu haben, ist die Auszugsstange 29 etwas kürzer gewählt, so dass die Hilfsklappe 44 auch einen hinteren Bereich 49 des Anschlagprofils 6 überstreichen kann, der durch die Klappe 39 nicht abgedeckt wird. Die Länge dieses hinteren Bereichs 49 entspricht mindestens der Länge des Schlittens 33, d. h. $L_2$ ist kleiner oder gleich $L_P - L_1$, wobei $L_1$ der Schlittenlänge entspricht.

Die Arbeitsweise dieser zweiten Ausführung der Vorrichtung entspricht im wesentlichen jener gemäss den Figuren 1 - 3, wobei die Logik zur automatischen Auswahl der anzuzeigenden Schnittlänge $S_i$ entsprechend vereinfacht wird. Der Aufbau dieser Ausführung wird durch das Wegfallen der Anschlagklappe 39 und des Sensors 42 einfacher. Der Messbereich ist jedoch bei gegebener Profillänge $L_P$ etwas kleiner als jener der Ausführung nach Fig. 1 - 3.

In anderen Ausführungen ist es denkbar, dass bei gewissen Maschinen wegen mechanisch/konstruktiver Gegebenheiten die Information des Winkelsensors 8 und des Längensensors 46 nicht in ein und dieselbe Messelektronik geführt und dort ausgewertet werden können. In diesem Falle könnte man unter Verwendung einer separaten Winkel- und Längenmesselektronik den Winkel u zuerst ablesen und dann über eine Tastatur in die Längenmesselektronik zur Korrektur der Schnittlänge S eingeben.

Die erfindungsgemässen Positioniervorrichtungen sind sehr einfach zu handhaben und gewährleisten eine Steigerung der Messgenauigkeit und Arbeitsgeschwindigkeit bei Winkelschnitten. Sie eignen sich wie bereits erwähnt zum Einsatz in verschiedensten Säge- rsp. Fräs- und Schneidemaschinen und können auch nachträglich in bestehenden Geräten installiert werden.

## Patentansprüche

1. Positioniervorrichtung zur Positionierung eines Werkstückes in einem Säge- bzw. Fräse- oder Schneidegerät, welches eine Sägeebene (51) definiert, in welcher das Werkstück bearbeitet wird, wobei die Positioniervorrichtung mindestens einen ersten Anschlag (53, 54) aufweist, der in einer Arbeitsebene um eine senkrecht zur Arbeitsebene liegende Drehachse (4) drehbar ist, und eine Anschlagebene definiert sowie mindestens einen zweiten Anschlag (39, 40), der entlang des ersten Anschlags (53, 54) verschiebbar ist, und am ersten Anschlag (53, 54) eine Anschlagposition (52, 52', 54, 54') definiert, wobei erste und zweite Messfühler (8; 46) zur Messung eines Drehwinkels (u)um die Drehachse (4) resp. zur Messung einer Verschiebungsposition (L) des zweiten Anschlags (39, 40) vorgesehen sind, dadurch gekennzeichnet, dass eine Auswertevorrichtung (15) vorgesehen ist, der die Resultate der Messfühler (8, 46) zugeleitet werden, und dass mit der Auswertevorrichtung (15) der Drehwinkel (u) sowie der Abstand (S) der Anschlagposition (52, 52', 54, 54') vom Schnittpunkt (53, 53') der Säge-, Arbeits- und Anschlagebenen ermittelbar und anzeigbar ist.

2. Positioniervorrichtung nach Anspruch 1, gekennzeichnet durch einen Anschlagbalken (6), der in der Arbeitsebene liegt, um die Drehachse (4) drehbar ist und zwei Seitenflächen aufweist, wobei jede Seitenfläche je einen der ersten Anschläge (53, 54) bildet.

3. Positioniervorrichtung nach Anspruch 2, dadurch gekennzeichnet, dass der Anschlagbalken (6)entlang seiner Längsachse (X) gegenüber der Drehachse (4) verschiebbar ist, wobei ein dritter Messfühler (11) zur Messung der Verschiebung (dP) des Anschlagbalkens (6) gegenüber der Drehachse (4) vorgesehen ist, und wobei das Resultat des dritten Messfühlers (11) der Auswertevorrichtung (15) zugeleitet wird, welche es im wesentlichen zum rsp. vom Resultat (L) des zweiten Messfühlers (46) addiert rsp. subtrahiert.

4. Positioniervorrichtung nach einem der Ansprüche 2 oder 3, dadurch gekennzeichnet, dass am Anschlagbalken (6) mindestens eine längs des Anschlagbalkens verschiebbare Anschlagklappe angeordnet ist, welche beidseits des Anschlagbalkens bringbar ist, und den mindestens einen zweiten Anschlag (39, 40) bildet.

5. Positioniervorrichtung nach Anspruch 4, dadurch gekennzeichnet, dass bei der Anschlagklappe ein Klappenpositionsdetektor (41, 42) angeordnet ist, mit welchem feststellbar ist, auf welcher Seite des Anschlagbalkens (6) sich die Anschlagklappe befindet.

6. Positioniervorrichtung nach einem der Ansprüche 4 oder 5, dadurch gekennzeichnet, dass mindestens zwei Anschlagklappen vorgesehen sind, welche in festem gegenseitigem Abstand ($L_1$) auf einem Schlitten (33) entlang des Anschlagbalkens (6) verfahrbar sind.

7. Positioniervorrichtung nach einem der Ansprüche 4 bis 6, dadurch gekennzeichnet, dass eine Hilfsanschlagklappe (44) vorgesehen ist, welche mit der mindestens einen Anschlagklappe unter definiertem Abstand ($L_2$) verbindbar ist.

8. Positioniervorrichtung nach Anspruch 7, dadurch gekennzeichnet, dass ein Hilfsklappendetektor (45) vorgesehen ist, mit welchem feststellbar ist, ob die Hilfsanschlagklappe (44) mit der Anschlagklappe verbunden ist.

9. Positioniervorrichtung nach Anspruch 8 und Anspruch 5, dadurch gekennzeichnet, dass in der Auswertevorrichtung (15) eine Auswertelogik vorgesehen ist, mittels der aufgrund der Signale des Klappenpositionsdetektors (41, 42) und des Hilfsklappendetektors (45) feststellbar ist, auf welcher Seit des Anschlagbalkens (6) und bei welcher Anschlagklappe bzw. Hilfsanschlagplatte die Anschlagposition (52, 52', 54, 54', 55, 55') ist.

10. Positioniervorrichtung nach einem der Ansprüche 4 bis 9, dadurch gekennzeichnet, dass die Auswertevorrichtung (15) eine Anzeige umfasst, welche mit der mindestens einen Anschlagklappe verbunden und mit dieser entlang des Anschlagbalkens (6) verfahrbar ist.

Fig. 1

Fig. 2

Fig. 3

EP 0 692 349 A2

FIG. 4

Stellung A

Stellung B

$R_1(u)$

$R_2(u)$

39

52

52'

53

53

53'

51

54

6

4

$b_1$

$b_2$

u

X

X

L

L

$L_0$

A

EP 0 692 349 A2

FIG. 5

Fig. 6

EP 0 692 349 A2

Fig. 7

44

6